# EUROPEAN PATENT SPECIFICATION

(11) **EP 0 603 771 B1**
(45) Date of publication and mention of the grant of the patent: **02.05.1997**
(21) Application number: 93120456.4
(22) Date of filing: 17.12.1993
(51) Int. Cl.: C03B 7/086

(54) **Unit for feeding molten glass to a glassware forming machine**
Vorrichtung zum Zuführen von geschmolzenem Glas zu einer Maschine zum Herstellen von Glasgegenständen
Unité pour la livraison de verre fondu à une machine de fabrication d'objets en verre

(30) Priority: 22.12.1992 IT TO921033
(43) Date of publication of application: 29.06.1994
(73) Proprietor: BOTTERO S.p.A., I-12010 Cuneo (IT)
(72) Inventor: Simondi, Carlo, I-12100 Cuneo (IT); Giraudo, Vittore, I-12100 Cuneo (IT); Basso, Gianpiero, I-12081 Beinette (IT)
(74) Representative: Jorio, Paolo, Dr. Ing.

(56) References cited:
- US-A- 2 749 665

## Description

The present invention relates to a unit for feeding molten glass to a glassware forming machine.

In particular, the present invention relates to a molten glass feed unit of the type comprising a fixed, substantially vertical guide; a slide connected in sliding manner to the guide and fitted with one or more vertical extrusion plungers for feeding a respective portion of molten glass to the forming machine; and a drive device for moving the slide cyclically back and forth along the guide and between two limit positions.

Various types of drive devices are known, a first of which comprises a first set of levers interposed between the slide and a mechanical cam-tappet control assembly, for moving the slide along the guide; and a second set of levers connected to the first, and which provides for adjusting both the zero position of the slide - and hence also of the plungers - and the travel of the slide as a function of the size of the item being produced see e.g. US-A-2 749 665.

Though still widely used, by virtue of being highly reliable from the operating standpoint, known devices of the aforementioned type present several drawbacks, all due to the large number of component parts and, hence, high production and assembly cost involved. Moreover, the cam-tappet assembly poses serious limitations in terms of output rate and versatility, by requiring replacement of the cam for switching from one production cycle to another.

Some of the aforementioned drawbacks are overcome by further drive devices comprising a screw-nut screw assembly, the nut screw of which is normally connected to the slide, and the axially-fixed screw of which is connected to the output shaft of a reversible electric motor operated cyclically so as to move the slide back and forth between said limit positions.

Known devices of the latter type, however, are not without drawbacks of their own, and are especially unsatisfactory when relatively high power is required for operating the slide, or when, for reasons of output, the slide must be operated under relatively high speed and acceleration conditions, which requirements are normally met using large, high power motors subject to a relatively high degree of break-away inertia. As is known, a high degree of inertia results in sluggish response and high energy consumption, which are especially undesirable when, as in this case, the motor is operated cyclically to drive a part back and forth at relatively high frequency.

It is an object of the present invention to provide a unit for feeding molten glass to a glassware forming machine, designed to overcome the aforementioned drawbacks, and which is both straightforward in design and cheap to produce, and provides for a high degree of reliability.

According to the preferred embodiment of present invention, there is provided a unit for feeding molten glass to a glassware forming machine, the unit comprising a fixed supporting frame; a guide integral with said fixed frame and extending along a first substantially vertical axis; a slide connected in axially-sliding manner to said guide and fitted with at least one feed plunger parallel to said axis; and drive means for moving the slide cyclically in both directions along the guide; characterized by the fact that said drive means comprise, in combination, a rocking lever hinged to said fixed frame so as to rock, in relation to said fixed frame, about a second axis substantially perpendicular to said first axis, and having a first end connected to said slide; and an adjustable-stroke, linear actuator connected to the second end of said lever.

In a further embodiment the drive means preferably also comprise selectively activated first and second integrating actuating means acting at least indirectly on said slide; and means for controlling said linear actuator and said first and second integrating actuating means; said first integrating actuating means exerting on said slide an action concordant with that exerted on the slide by said linear actuator for moving the slide in one of said directions; and said second integrating actuating means exerting on said slide an action concordant with that of said linear actuator for moving the slide in the other of said directions.

A number of non-limiting embodiments of the present invention will be described by way of example with reference to the accompanying drawings, in which:
Figure 1 shows a side view, with parts removed for clarity, of a preferred embodiment of the unit according to the present invention;
Figure 2 shows a section along line II-II in Figure 1;
Figure 3 shows a schematic side view of a variation of the Figure 1 unit;
Figure 4 shows a partial section along line IV-IV in Figure 3;
Figure 5 shows a schematic side view of a variation of the Figure 3 unit.

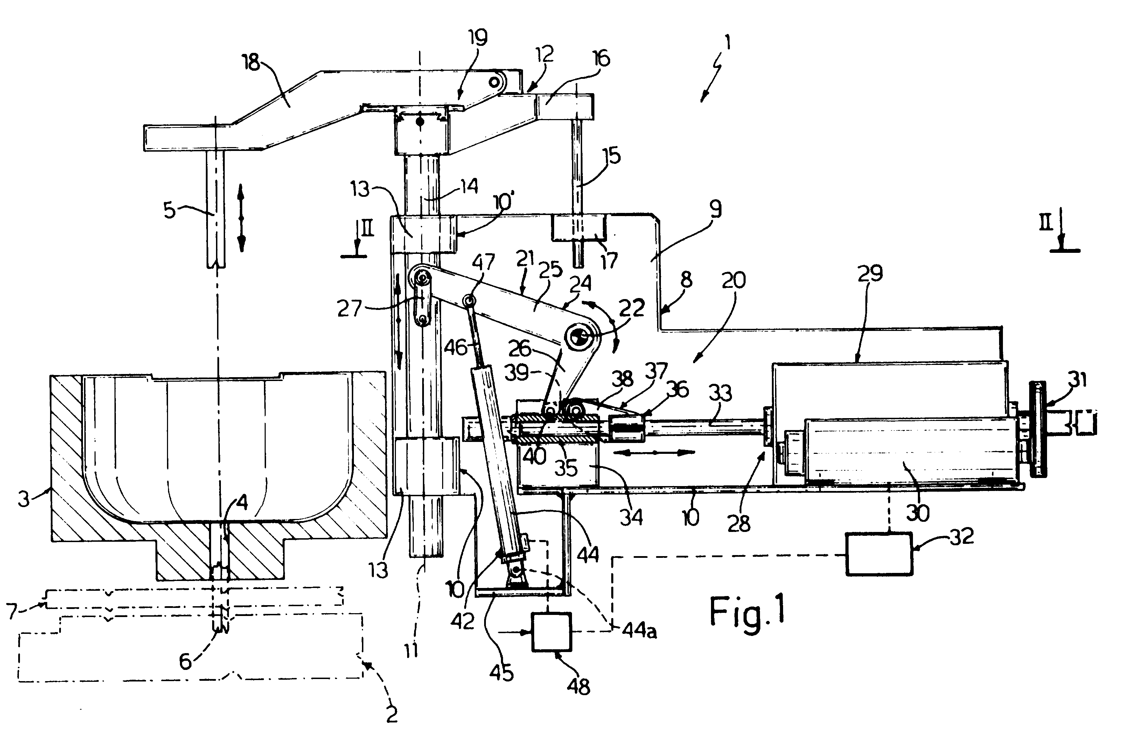

Number 1 in Figure 1 indicates a unit for feeding molten glass to a machine 2 for producing glassware (not shown). In unit 1, the molten glass is contained inside a pot 3 having one or more openings 4 through which a respective portion 6 of molten glass is extruded by a respective vertical plunger 5, and is subsequently cut into pieces (not shown) of given size by a scissor device 7, and then fed to machine 2.

Unit 1 comprises a fixed supporting frame 8 having a vertical wall 9 and a horizontal plate 10 projecting from wall 9. Wall 9 is fitted integral with a guide 10' having a vertical axis 11 and to which is fitted in axially-sliding manner a slide 12 for supporting and operating plungers 5. More specifically, guide 10' comprises two aligned sleeves 13 coaxial with axis 11; and slide 12 comprises a main shaft 14 engaging sleeves 13 in sliding manner. Slide 12 also comprises a rod 15 extending parallel to and eccentrically in relation to shaft 14, having a top end portion connected integral with shaft 14 by means of a bracket 16, and engaging in axially-sliding manner a guide sleeve 17 integral with wall 9.

The top end portion of shaft 14 is fitted with a supporting arm 18 projecting over pot 3 on the opposite side of shaft 14 to rod 15, and fitted integral with plungers 5 coaxial with respective openings 4. The position of arm 18 in relation to shaft 14 is adjustable by means of a known device 19 for adjusting plungers 5 in a plane perpendicular to axis 11 and to the Figure 1 plane, and in two perpendicular directions.

Unit 1 also comprises a drive device 20 for moving slide 12 cyclically along guide 10' in said two directions and hence also moving plungers 5 between a first top limit position and a second bottom limit position in which each plunger 5 engages a respective opening 4.

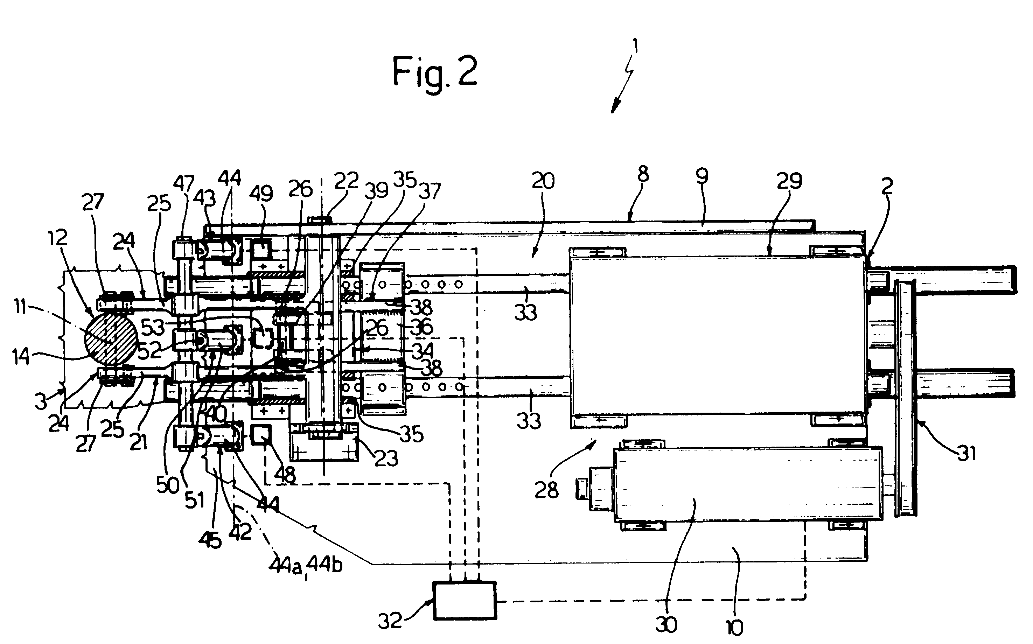

Device 20 comprises an L-shaped rocking lever 21 having an intermediate portion hinged to wall 9 by a pin 22 which is perpendicular to axis 11 and to the Figure 1 plane, and is connected at one end to wall 9 and at the other end to a vertical bracket 23 (Figure 2) connected to plate 10. More specifically, and as shown clearly in Figure 2, lever 21 is defined by two L-shaped portions 24 parallel to each other and to wall 9, and each presenting a first and second arm 25, 26 substantially perpendicular to each other and of which arm 25 is longer than arm 26. According to a variation not shown, arms 25 are shorter than arms 26. Lever 21 is connected to shaft 14 by a pair of spaced connecting rods 27, each presenting one end hinged to shaft 14, and the opposite end hinged to the end of a respective arm 25.

At the opposite end to that connected to shaft 14, lever 21 is connected to a known actuating unit 28 for rotating lever 21 both ways about the axis of pin 22, and preferably of the type described and illustrated in Italian Patent Application n. 67991-A/90 filed on 11/12/1990 by the present Applicant, and to which full reference is made herein in the interest of full disclosure.

More specifically, and as shown in Figures 1 and 2, unit 28 is supported on plate 10, and comprises a linear, nut-nut screw actuator 29; and a motor 30 controlled in known manner by a known programmable control unit 32, and having its output shaft connected to the input shaft of actuator 29 by a preferably toothed belt drive 31. Actuator 29 comprises a pair of parallel output rods 33 perpendicular to axis 11, extending through a guide body 34 integral with plate 10, and engaging in axially-sliding manner respective guide bushes 35. Rods 33 are connected by a cross member 36 fitted in axially-adjustable manner in relation to rods 33 and comprising a fork 37. To each arm 38 of fork 37 is hinged one end of a respective connecting rod 39, the opposite end of which is hinged to a corresponding arm 26 of lever 21 by means of a pin 40.

With reference to Figure 2, device 20 also comprises a first and second single-acting pneumatic cylinder 42, 43, each of which in turn comprises a body 44 hinged to a plate 45 integral with wall 9, so as to rotate about an axis 44a parallel to the axis of pin 22; and an output rod 46 hinged to a portion of lever 21 adjacent to shaft 14 by means of a pin 47 parallel to pin 22. Cylinders 42, 43 are activated by respective valves 48, 49, in turn controlled by unit 32, and are selectively activated so as to exert on slide 12 an action concordant with and integrating that exerted on slide 12 by motor 30. More specifically, cylinder 42 is activated so as to cause slide 12 to raise plungers 5; and cylinder 43 so as to cause slide 12 to lower plungers 5.

Device 20 also comprises a third, double-acting, pneumatic cylinder 50 (Figure 2) located between cylinders 42, 43, and also presenting a body 51 hinged to plate 45 so as to rotate about an axis 44b coincident with axis 44a; and an output rod 52 hinged to lever 21 by pin 47. Cylinder 50 is activated by a respective valve 53, in turn controlled by unit 32, and may be activated at any time during the cycle, e.g. for replacing either one of cylinders 42, 43, or for further increasing the action exerted by either one of cylinders 42, 43 on slide 12.

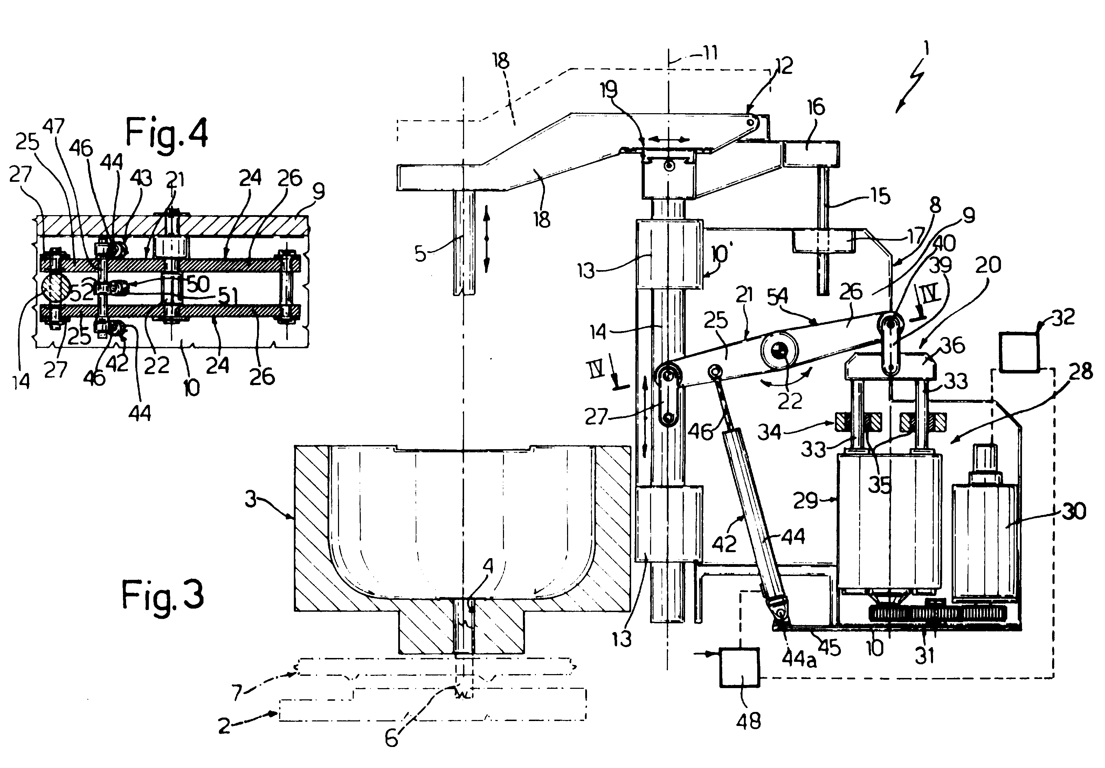

According to the variation shown in Figure 3, unit 1 comprises a lever 54 which differs from lever 21 by being straight and comprising arms 25 shorter than arms 26. According to a further embodiment (not shown), arms 25 are longer than arms 26.

With reference to the variation shown in Figure 3, actuator 29 is so positioned that output rods 33 extend substantially parallel to axis 11, thus enabling a substantial reduction in the overall length of unit 1.

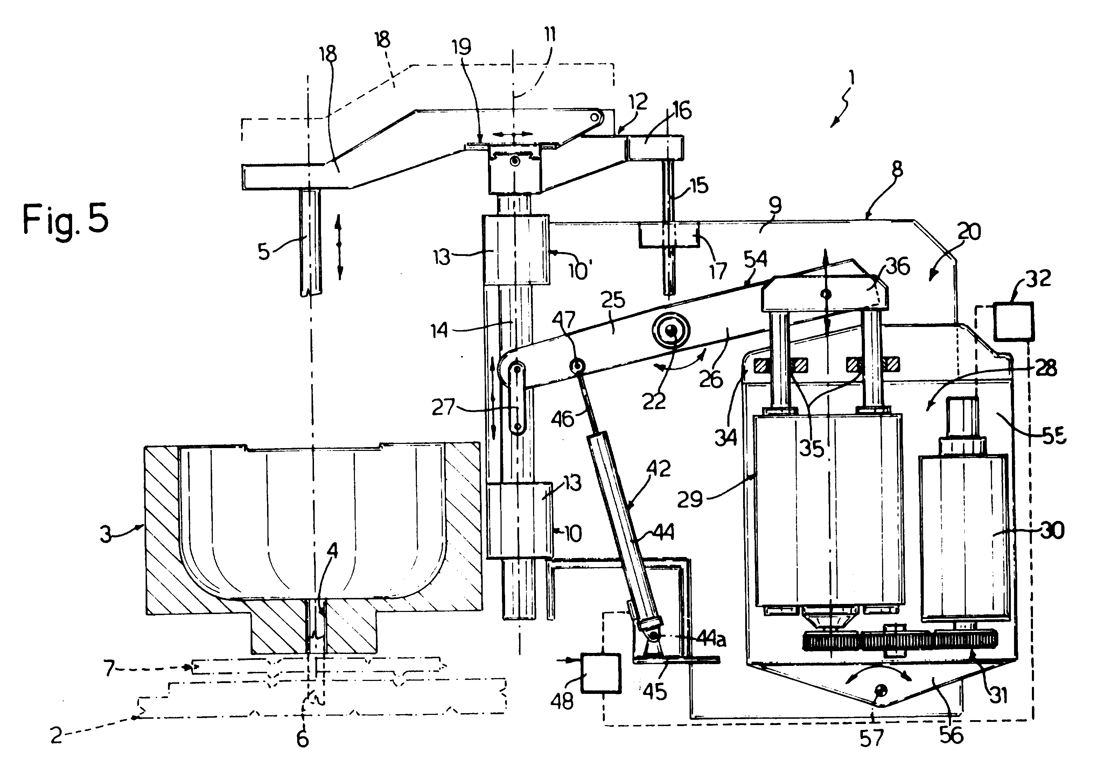

Unit 1 in the Figure 5 embodiment differs from that in Figure 3 by also comprising a movable frame 55 supporting actuator 29 and motor 30, and the bottom end portion 56 of which is hinged to wall 9 so as to swing about an axis 57 parallel to the axis of pin 22 and to the Figure 5 plane. Moreover, connecting rods 39 and fork 37 of cross member 36 are eliminated, and cross member 36 is hinged directly to arms 26 of lever 54.

Operation of unit 1 will now be described as of an intermediate operating condition wherein plungers 5 are set to an intermediate "zero" position between said two limit positions, and assuming the first stage to be performed in the operating cycle consists in moving plungers 5 into the top limit position.

As of the above condition, unit 32 operates in known manner motor 30 which, via actuator 29, cross member 36 and connecting rods 39, rotates lever 21 clockwise (in Figures 1, 3) about the axis of pin 22. At the same time, unit 32 activates valve 48, and output rod 46 of cylinder 42 is extracted so as to exert on lever 21 a thrust integrating that exerted by motor 30 and so contributing towards rotating lever 21 clockwise and raising plungers 5. During rotation of lever 21, cylinders 43 and 50 remain idle, and their respective output rods 46 and 52 are extracted by lever 21 itself.

Upon plungers 5 reaching a position just short of said top limit position, unit 32 de-activates valve 48 so as to disable cylinder 42, at which point, plungers 5, controlled solely by motor 30, are decelerated until they eventually reach zero speed at said top limit position.

If, on disabling cylinder 42, the speed of plungers 5 is such as to prevent troublefree control by motor 30 alone, valve 53 may be activated, again by unit 32, for so operating cylinder 50 as to exert on lever 21 a braking action integrating that exerted by motor 30.

Upon plungers 5 reaching the top limit position, unit 32 continues to disable cylinder 42, reverses motor 30, and activates valve 49 which provides for withdrawing output rod 46 of cylinder 43; and, together with motor 30, rod 46 rotates lever 21 anticlockwise (in Figures 1, 3) so as to lower plungers 5. Upon plungers 5 more or less reaching said "zero" position, unit 32 de-activates valve 49 so as to disable cylinder 43, at which point, plungers 5, controlled solely by motor 30, are decelerated gradually into said bottom limit position.

As in the previous case, if, on disabling cylinder 43, the speed of plungers 5 is such as to prevent troublefree control by motor 30 alone, valve 53 may be activated once more, again by unit 32, for so operating cylinder 50 as to exert on lever 21 a braking action integrating that exerted by motor 30.

Upon plungers 5 reaching the bottom limit position, unit 32 again reverses motor 30 and, at the same time, activates valve 48 which in turn again activates cylinder 42 so as to exert on lever 21 a thrust concordant with that exerted by motor 30 and such as to restore plungers 5 to the "zero" position.

In the event the combined action of the motor and cylinder fails to meet the requirements of particular operating conditions of plungers 5, valve 53 may be activated, again by unit 32, for so operating cylinder 50 - even during operation of either one of cylinders 42, 43 - as to exert further action on lever 21, in addition to the combined action already described of the motor and cylinder. This is normally the case, for instance, when the plungers are located close to said limit positions and must be accelerated relatively rapidly.

Finally, valve 53 may be activated, again by unit 32, in place of valves 48 or 49; and cylinder 50 may be used, at least for brief operating periods, in place of either one of cylinders 42 or 43, in the event, for example, of a breakdown.

Clearly, therefore, in addition to being highly flexible and hence readily adaptable to different production requirements, drive device 20 is also especially suitable for operating plungers 5 in cases requiring high-power extrusion and relatively fast acceleration of the plungers. Indeed, for a given output of device 20, cylinders 42 and 43 enable a substantial reduction in the size of motor 30, and more specifically for reducing it to below the size defining the maximum permissible limit as regards inertia of the motor.

Moreover, in the case described of a lever 21 wherein the length ratio of arms 25, 26 is greater than one, lever 21 provides, again for a given output of device 20, for further reducing the size of motor 30, and therefore for using a smaller motor than those normally required for meeting the above requirements.

Finally, cylinder 50 provides for further extending the scope of device 20 by further integrating the combined action of the motor and cylinder and so catering to an instantaneous demand for extra thrust on plungers 5, and also by assisting motor 30 in braking plungers 5. Also, by virtue, if necessary, of fully replacing either one of cylinders 42, 43, cylinder 50 provides for preventing stoppage of unit 1 in the event of malfunctioning or failure of cylinder 42 or 43, and so greatly reducing running cost.

To those skilled in the art it will be clear that changes may be made to device 20 as described and illustrated herein without, however, departing from the scope of the present invention as defined by the appended claims. In particular, provision may be made for a different number and different arrangement of cylinders 42, 43, 50; and cylinders 42, 43, 50 may be activated at different points in the operating cycle from those described, for enhancing performance of device 20 and the dynamic performance of unit 1.

## Claims

1. A unit (1) for feeding molten glass to a glassware forming machine (2), the unit (1) comprising a fixed supporting frame (8); a guide (10') integral with said fixed frame (8) and extending along a first substantially vertical axis (11); a slide (12) connected in axially-sliding manner to said guide (10') and fitted with at least one feed plunger (5) parallel to said axis (11); and drive means (20) for moving the slide (12) cyclically in both directions along the guide (10'); characterized by the fact that said drive means (20) comprise, in combination, a rocking lever (21) hinged to said fixed frame (8) so as to rock, in relation to said fixed frame (8), about a second axis (22) substantially perpendicular to said first axis (11), and having a first end connected to said slide (12); and an adjustable-stroke, linear actuator (28) connected to the second end of said lever (21).

2. A unit as claimed in Claim 1, characterized by the fact that said drive means (20) also comprise selectively activated first (42) and second (43) integrating actuating means acting at least indirectly on said slide (12); and means (32) for controlling said linear actuator (28) and said first (42) and second (43) integrating actuating means; said first integrating actuating means (42) exerting on said slide (12) an action concordant with that exerted on the slide (12) by said linear actuator (28) for moving the slide (12) in one of said directions; and said second integrating actuating means (43) exerting on said slide (12) an action concordant with that of said linear actuator (28) for moving the slide (12) in the other of said directions.

3. A unit as claimed in Claim 2, characterized by the fact that said first (42) and second (43) integrating actuating means are interposed between said fixed frame (8) and said lever (21).

4. A unit as claimed in Claim 2 or 3, characterized by the fact that said first and second integrating actuating means respectively comprise at least a first (42) and at least a second (43) actuating cylinder; each said actuating cylinder (42)(43) comprising a body (44) hinged to said fixed frame (8), and an output rod (46) hinged to an intermediate portion of said lever (21).

5. A unit as claimed in Claim 4, characterized by the fact that said cylinders (42)(43) are single-acting pneumatic cylinders.

6. A unit as claimed in any one of the foregoing Claims from 2 to 5, characterized by the fact that said drive means (20) also comprise third integrating actuating means (50) acting at least indirectly on said slide (12); said third integrating actuating means (50) being controlled by said control means (32) so as to cooperate with said linear actuator (28) in at least one of said traveling directions of said slide (12).

7. A unit as claimed in Claim 6, characterized by the fact that said third integrating actuating means comprise at least one actuating cylinder (50) interposed between said fixed frame (8) and said lever (21).

8. A unit as claimed in any one of the foregoing Claims from 2 to 7, characterized by the fact that said control means (32) are programmable control means.

9. A unit as claimed in any one of the foregoing Claims, characterized by the fact that said linear actuator (28) comprises a screw-nut screw assembly (29), and a motor (30) for operating said screw-nut screw assembly (29).

10. A unit as claimed in any one of the foregoing Claims, characterized by the fact that it comprises first connecting means (27) interposed between said first end of said lever (21) and said slide (12); and second connecting means (39) interposed between said linear actuator (28) and said second end of said lever (21).

11. A unit as claimed in any one of the foregoing Claims, characterized by the fact that it comprises a movable frame (55) supporting said linear actuator (28); said movable frame (55) being hinged to said fixed frame (8) so as to swing, in relation to the fixed frame (8), about a third axis (57) parallel to said second axis (22); said linear actuator (28) comprising a movable member (36); and a second end of a lever (54) being hinged to said movable member (36).

## Patentansprüche

1. Vorrichtung (1) zum Zuführen von geschmolzenem Glas zu einer Maschine (2) zum Herstellen von Glasgegenständen, wobei die Vorrichtung (1) einen tragenden Standrahmen (8), ein an dem Standrahmen (8) angebrachtes und sich entlang einer im wesentlichen vertikalen ersten Achse (11) erstreckendes Führungsteil (10'), ein in axial verschiebbarer Weise mit dem Führungsteil (10') verbundenes sowie an wenigstens ein parallel zu der Achse (11) verlaufendes Zuführrohr (5) angebrachtes Gleitteil (12) und Antriebsmittel (20) zum zyklischen Bewegen des Gleitteiles (12) entlang des Führungsteiles (10') in beiden Richtungen aufweist, **dadurch gekennzeichnet**, daß das Antriebsmittel (20) in Kombination einen schwenkbaren Arm (21), der an dem Standrahmen (8) zum Schwenken in bezug auf den Standrahmen (8) um eine im wesentlichen rechtwinklig zu der ersten Achse (11) ausgerichteten zweiten Achse (22) angebracht ist und der über ein mit dem Gleitteil (12) verbundenes erstes Ende verfügt, und ein hubeinstellbares Linearbetätigungsteil (28) aufweist, das mit dem zweiten Ende des Armes (21) verbunden ist.

2. Vorrichtung nach Anspruch 1, dadurch gekennzeichnet, daß das Antriebsmittel (20) weiterhin über gesondert betätigbare, integrierte, wenigstens indirekt auf das Gleitteil (12) einwirkende erste (42) und zweite (43) Betätigungsmittel und Mittel (32) zum Steuern des Linearbetätigungsteiles (28) sowie der integrierten ersten (42) und zweiten (43) Betätigungsmittel verfügt, wobei die integrierten ersten Betätigungsmittel (42) auf das Gleitteil (12) eine Wirkung ausüben, die zum Bewegen des Gleitteiles (12) in eine der Richtungen mit der durch das Linearbetätigungsteil (28) ausgeübten Wirkung zusammenspielt und wobei die integrierten zweiten Betätigungsmittel (43) auf das Gleitteil (12) eine Wirkung ausüben, die zum Bewegen des Gleitteiles (12) in der anderen Richtung mit der durch das Linearbetätigungsteil (28) ausgeübten Wirkung zusammenspielt.

3. Vorrichtung nach Anspruch 2, dadurch gekennzeichnet, daß die integrierten ersten (42) und zweiten (43) Betätigungsmittel zwischen dem Standrahmen (8) und dem Arm (21) angeordnet sind.

4. Vorrichtung nach Anspruch 2 oder 3, dadurch gekennzeichnet, daß die integrierten ersten und zweiten Betätigungsmittel jeweils wenigstens einen ersten (42) und wenigstens einen zweiten (43) Betätigungszylinder aufweisen, wobei jeder Betätigungszylinder (42, 43) einen an dem Standrahmen (8) angebrachten Zylinderkörper (44) und eine an einem Zwischenabschnitt des Armes (21) angebrachte Ausfahrstange (46) aufweist.

5. Vorrichtung nach Anspruch 4, dadurch gekennzeichnet, daß die Zylinder (42, 43) in einer Richtung wirkende Pneumatikzylinder sind.

6. Vorrichtung nach einem der vorangehenden Ansprüche 2 bis 5, dadurch gekennzeichnet, daß die Antriebsmittel (20) weiterhin wenigstens indirekt auf das Gleitteil (12) einwirkende integrierte dritte Betätigungsmittel (50) aufweisen, wobei die integrierten dritten Betätigungsmittel (50) durch die Steuermittel (32) angesteuert sind, um mit dem Linearbetätigungsteil (28) in wenigstens einer der Bewegungsrichtungen des Gleitteiles (12) zusammenzuwirken.

7. Vorrichtung nach Anspruch 6, dadurch gekennzeichnet, daß die integrierten dritten Betätigungsmittel wenigstens einen Betätigungszylinder (50) aufweisen, der zwischen dem Standrahmen (8) und dem Arm (21) angeordnet ist.

8. Vorrichtung nach einem der vorangehenden Ansprüche 2 bis 7, dadurch gekennzeichnet, daß die Steuermittel (32) programmierbare Steuermittel sind.

9. Vorrichtung nach einem der vorangehenden Ansprüche, dadurch gekennzeichnet, daß das Linearbetätigungsteil (28) eine Spindelanordnung (29) mit Schraube und Schraubenmutter und einen Motor (30) zum Betätigen der Spindelanordnung (29) aufweist.

10. Vorrichtung nach einem der vorangehenden Ansprüche, dadurch gekennzeichnet, daß weiterhin zwischen dem ersten Ende des Armes (21) und dem Gleitteil (12) angeordnete erste Verbindungsmittel (27) und zwischen dem Linearbetätigungsteil (28) und dem zweiten Ende des Armes (21) angeordnete zweite Verbindungsmittel (39) vorgesehen sind.

11. Vorrichtung nach einem der vorangehenden Ansprüche, dadurch gekennzeichnet, daß ein das Linearbetätigungsteil (28) tragender bewegbarer Rahmen (55) vorgesehen ist, wobei der bewegbare Rahmen (55) an dem Standrahmen (8) zum Schwenken in bezug auf den Standrahmen (8) um eine parallel zu der zweiten Achse (22) verlaufende dritte Achse (57) angebracht ist, das Linearbetätigungsteil (28) ein bewegbares Bauteil (36) aufweist und ein zweites Ende eines Armes (54) an dem bewegbaren Bauteil (36) angebracht ist.

## Revendications

1. Unité (1) d'alimentation en verre fondu d'une machine (2) de formage d'articles en verre, l'unité (1) comprenant un cadre de support fixe (8); un guide (10') monobloc avec ledit cadre fixe (8) et qui s'étend le long d'un premier axe (11) sensiblement vertical; une pièce coulissante (12) installée de manière à pouvoir glisser axialement sur ledit guide (10') et munie d'au moins un plongeur d'alimentation (5) parallèle audit axe (11); et un moyen moteur (20) pour déplacer la pièce coulissante (12) de façon cyclique dans les deux sens le long du guide (10'); caractérisée par le fait que ledit moyen moteur (20) comprend, en combinaison, un levier basculant (21), articulé sur ledit cadre fixe (8) de manière à basculer, par rapport audit cadre fixe (8), autour d'un deuxième axe (22) sensiblement perpendiculaire audit premier axe (11), et qui présente une première extrémité reliée à ladide pièce coulissante (12); et un actionneur linéaire (28) à course réglable relié à la deuxième extrémité dudit levier (21).

2. Unité selon la revendication 1, caractérisée par le fait que ledit moyen moteur (20) comprend aussi des premier (42) et deuxième (43) moyens d'actionnement complémentaires, actionnés sélectivement, qui agissent au moins indirectement sur ladite pièce coulissante (12); et des moyens (32) pour commander ledit actionneur linéaire (28) et lesdits premier (42) et deuxième (43) moyens d'actionnement complémentaires; ledit premier moyen d'actionnement complémentaire (42) exerçant sur ladite pièce coulissante (12) une action concordante avec celle exercée sur la pièce coulissante (12) par ledit actionneur linéaire (28) pour déplacer la pièce coulissante (12) dans l'un desdits sens; et ledit deuxième moyen d'actionnement complémentaire (43) exerçant sur ladite pièce coulissante (12) une action concordante avec celle dudit actionneur linéaire (28) pour déplacer la pièce coulissante (12) dans l'autre desdits sens.

3. Unité selon la revendication 2, caractérisée par le fait que lesdits premier (42) et deuxième (43) moyens d'actionnement complémentaires sont intercalés entre ledit cadre fixe (8) el ledit levier (21).

4. Unité selon la revendication 2 ou 3, caractérisée par le fait que lesdits premier et deuxième moyens d'actionnement complémentaires comprennent respectivement au moins un premier (42) et au moins un deuxième (43) cylindre actionneur, chacun desdits cylindres actionneurs (42, 43) comprenant un corps (44) articulé sur ledit cadre fixe (8) et une tige de sortie (46) articulée sur une partie intermédiaire dudit levier (21).

5. Unité selon la revendication 4, caractérisée par le fait que lesdits cylindres (42, 43) sont des cylindres pneumatiques simple effet.

6. Unité selon l'une quelconque des revendications précédentes 2 à 5, caractérisée par le fait que ledit moyen moteur (20) comprend aussi un troisième moyen d'actionnement complémentaire (50) agissant au moins indirectement sur ladite pièce coulissante (12); ledit troisième moyen d'actionnement complémentaire (50) étant commandé par lesdits moyens de commande (32) en vie de coopérer avec ledit actionneur linéaire (28) dans au moins un desdits sens de déplacement de ladite pièce coulissante (12).

7. Unité selon la revendication 6, caractérisée par le fait que ledit troisième moyen d'actionnement complémentaire comprend au moins un cylindre actionneur (50) intercalé entre ledit cadre fixe (8) et ledit levier (21).

8. Unité selon l'une quelconque des revendications précédentes 2 à 7, caractérisée par le fait que lesdits moyens de commande (32) sont des moyens de commande programmables.

9. Unité selon l'une quelconque des revendications précédentes, caractérisée par le fait que ledit actionneur linéaire (28) comprend un ensemble à vis-écrou (29) et un moteur (30) servant à faire fonctionner ledit ensemble vis-écrou (29).

10. Unité selon l'une quelconque des revendications précédentes, caractérisée par le fait qu'elle comprend un premier moyen de liaison (27) intercalé entre ladite première extrémité dudit levier (21) et ladite pièce coulissante (12); et un deuxième moyen de liaison (39) intercalé entre ledit actionneur linéaire (28) et ladite deuxième extrémité dudit levier (21).

11. Unité selon l'une quelconque des revendications précédentes, caractérisée par le fait qu'elle comprend un cadre mobile (55) portant ledit actionneur linéaire (28); ledit cadre mobile (55) étant articulé sur ledit cadre fixe (8) de manière à basculer, par rapport au cadre fixe (8), autour d'un troisième axe (57) parallèle audit deuxième axe (22); ledit actionneur linéaire (28) comprenant un élément mobile (36); et une deuxième extrémité d'un levier (54) étant articulée sur ledit élément mobile (36).
